# EUROPEAN PATENT SPECIFICATION

(11) **EP 2 307 153 B1**
(45) Date of publication and mention of the grant of the patent: **04.01.2012**
(21) Application number: 09772500.6
(22) Date of filing: 02.07.2009
(51) Int. Cl.: B21C 37/12, B23K 9/028, B23K 9/032, B23K 26/28, B23K 26/30, B23K 33/00

(54) **PROCESS FOR THE MANUFACTURE OF AN ELONGATED TUBE AND USE OF THE TUBE**
VERFAHREN ZUR HERSTELLUNG EINES LÄNGLICHEN ROHRS UND VERWENDUNG DES ROHRS
PROCESSUS POUR LA FABRICATION D'UN TUBE ALLONGÉ ET UTILISATION DU TUBE

(30) Priority: 02.07.2008 EP 08159546
(43) Date of publication of application: 13.04.2011
(73) Proprietor: Shell Internationale Research Maatschappij B.V., 2596 HR The Hague (NL)
(72) Inventor: FREETH, Graham Dudley, NL-2288 GS Rijswijk (NL); SMITH, Richard James Anthony, NL-2288 GS Rijswijk (NL); WEIL, Wolfgang, D-79379 Mullheim (DE)
(74) Representative: Matthezing, Robert Maarten
(86) International application number: PCT/EP2009/058325
(87) International publication number: WO 2010/000800

(56) References cited:
- DE-A1- 2 407 930
- DE-A1- 19 758 001
- DE-C1- 4 117 555
- FR-A- 2 357 315
- US-A- 3 747 446
- US-A- 4 509 447
- US-A1- 2007 245 789

## Description

This invention provides a process for the manufacture of an elongated tube, an elongated tube obtained by such a process and the use of the elongated tube as inner casing in the manufacture of an elongated, multilayered tubular body.

Elongated tubular bodies comprising an inner and an outer casing are known from WO 2007/072078, GB 2433564, US 6048428 and WO 00/29162. These tubular bodies are suitable for the transport of natural gas and liquid petroleum products.

In WO 2006/016190 a method is disclosed to form an elongated tubular body having an inner casing and an outer casing, wherein the outer casing has one or more strips of self-overlapping helically wound material and said inner casing has an elongated tubular structure formed by a continuous forming process. The inner casing may be formed from one or more strips of self-overlapping helically wound material.

In Fr-A-2357315 a process for the manufacture of an elongated tube is disclosed involving the formation of a rotating tube.

The continuous production of elongated tubes or tubular bodies comprising of self-overlapping strips requires a difficult technique. Elongated tubes or tubular bodies consisting of self-overlapping strips require the bending of a profile. Bending a profiled strip causes an uneven distribution of stress across the strip, which may result in early failure. The stress concentration (expressed by the stress concentration factor) across the strip may weaken the strength of the tube. This is especially disadvantageous when very long elongated tubes are to be made.

In the case that elongated tubes comprising one or more layers without any profile are made from flat, elongated metal strips in a process comprising a helical winding process followed by welding, the process usually results in a revolving or rotating tube. In the case that relatively short tubes are produced, this is not a problem. However, in the case that relatively long tubes are to be produced, e.g. tubes of several hundreds of meters or even more, it will require extra equipment and energy to rotate such a long tube.

It has now been found that stronger and longer elongated tubes without any profile can continuously and advantageously be made from a flat, elongated metal strip in the form of a helix having windings, wherein consecutive windings in the helix do not overlap each other by manufacturing a rotating temporary tube, cutting cylinders from the tube and welding the cylinders to each other to form the elongated tube, the welding process suitably comprising non-rotating cylinders.

Accordingly, the invention provides a process for the manufacture of an elongated tube the process comprising the following steps:
(a) forming a rotating temporary tube having a first end at which the tube is continuously produced and a second end opposite to the first end, by continuously supplying a flat, elongated metal strip to a guiding body, which is forming a helix from the strip in such a way that consecutive windings of the helix do not overlap, and helically welding the consecutive windings of the helix supplied to the guiding body to each other;
(b) cutting cylinders from the second end of the rotating temporary tube; and
(c) welding the cylinders obtained in step (b) to each other to form the elongated tube, wherein steps a, b and c are performed at the same site or in close proximity to each other.

An advantage of the process according to the invention is that the process for manufacturing the elongated tube comprises the manufacture of a temporary tube that is being continuously produced and which is cut into cylinders followed by welding the cylinders to each other to form the elongated tube. In this way long or even very long tubular elements can be made and used. The process does not require rotation of the elongated tube. Furthermore, by virtue of the feature that flat, elongated metal strips are used to prepare the preformed helix shaped elongated tube, hardly any failures will be present in the preformed helix, for instance due to stress concentration.

The present invention also concerns the use of the elongated tube obtainable by said process in the manufacture of an elongated, multilayered tubular body comprising a tubular inner hollow core, said elongated tube as inner casing surrounding the hollow core and an outer casing surrounding the inner casing, the outer casing comprising at least two concentric layers surrounding each other, each layer consisting of one or more elongated metal strips preformed into the shape of a helix having consecutive windings that do not overlap each other and having a gap of at most 1 cm in axial direction between consecutive windings, wherein each gap in a layer not being the outer layer is fully covered by a winding of the helix of the consecutive surrounding layer, wherein consecutive layers in the outer casing are bound to each other by an adhesive, the process comprising providing the elongated tube as inner casing, providing one or more first flat elongated metal strips preformed into the shape of a helix and applying the helix onto the inner casing to form the first layer of the outer casing, providing and applying adhesive, providing one or more second flat elongated metal strip preformed into the shape of a helix and applying the helix on the first layer of the outer casing to form the second layer of the outer casing, optionally followed by the further provision and application of one or more additional layers of adhesive and flat elongated metal strips preformed into the shape of a helix.

In the above process, the inner casing is non-rotating, which gives the possibility to wind the layers of the outer casing, comprising of one or more elongated metal strips into the shape of a helix, around the non-rotating forwardly moving elongated tube. In this way difficulties in forming long elongated multilayered tubular bodies are overcome. An advantage of using the elongated tube as inner casing is that the tube may be manufactured from corrosion resistant material. In this way the requirements of the pipeline (corrosion resistance and strength) are, at least partly, separated. The inner casing provides especially the corrosion resistance, the outer layers provide the major part of the strength (axial as well radial). The hollow core in the centre of the elongated body is the space for the transport of gas and/or liquids.

The elongated tube is suitably made from metal, especially from steel, more especially from corrosion resistant steel. In principle any material that provides a sealing structure for the contained product that provides resistance to corrosion, stress or hydrogen induced cracking may be used.

The process for the manufacture of the elongated tube according to the invention comprises several steps. In the first step a rotating temporary tube is formed. The temporary tube in step (a) is formed by continuously supplying a flat, elongated metal strip to the guiding body, which is forming a helix from the strip in such a way that the consecutive windings of the helix do not overlap.

The guiding body suitably comprises a cylinder. By guiding the metal strip over the inner side of the cylinder the helix is formed. The guiding body preferably comprises a cylinder formed by rollers. In this way the formed temporary tube will undergo less resistance during its movement through the guiding body.

Preferably, the temporary tube is formed by continuously supplying a flat, elongated metal strip preformed into the shape of a helix to a guiding body in such a way that consecutive windings of the helix do not overlap. The consecutive windings of the helix do not overlap each other and preferably, touch or almost touch each other.

The preformed flat, elongated metal strip is suitably made by plastic deformation of a flat elongated metal strip in a roll forming system. The roll forming system consists of mandrels to allow the flat metal strips to be bent into smooth curves without undesirable creasing, kinking or collapsing. The mandrels may be driven by direct connection to an electric motor or engine or are driven by attachment to a bearing-supported, pulley driven support. Such mandrels are well known in the art. Suitable mandrels are tubular bars and rollers. Preferably rollers are used. The roll forming system comprises an assembly of rollers, preferably 3 to 5 rollers, more preferably 3 rollers. The rollers may be of the same size or of a different size. In the case of a three roller system, the actually bending (or preforming) is done around the middle roller (see for instance EP07107564.2, Figure 6). The diameter of this roller is suitably between 1 and 30 cm, preferably between 2 and 20 cm. The size of the other rollers may be smaller or larger, but is preferably such that there is sufficient space for bearing and drivers. Preferably all rollers are provided with drivers to pull the metal strip through the roll forming system. Preferably the strip is fed into the roll forming system via a guiding element, the guiding element comprising an elongated box provided with a elongated slit, the width of the slit slightly larger than the metal strip, preferably the slit up till 2 mm larger than the width of the metal strip, more preferably up till 1 mm, most preferably up till 0.5 mm.

Preferably, the flat elongated metal strip is made by uncoiling a roll of flat elongated metal strip, followed by straightening.

Preferably, the flat, elongated metal strips are trimmed before fed into the guiding element by cutting away the edges. In the trimming process any irregularities of the edges of the strips are removed. Trimming may be done by scraping, sand papering or polishing, but is preferably done by laser trimming. Trimming will especially improve the quality of the welding process.

The elongated flat metal strip may be fed to the roll forming system under an angle, the angle being the angle between the strip and the normal of the rollers in the roll forming system. Due to this angle, the metal strip will be sliding or slipping over the rollers. Suitably, the flat elongated metal strip is fed to the rollers under a feed angle of 0.6 to 1.4, preferably 0.8 to 1.2, times the angle alpha, the angle alpha being the same as the angle alpha in the finished tubular body (see for instance EP07107564.2, Figure 4).

Suitably, the guiding element comprises two rows of rollers or bearings to guide the flat elongated metal strip, the two rows of rollers or bearings forming the edges of the slit and made from a material, especially a metal or alloy, with a higher hardness than the hardness of the metal strip.

Suitably, the distance between the guiding element and the roll forming system is less than 5 cm, preferably less than 1 cm, more preferably less than 0.5 cm. A relatively short distance is preferred, thus avoiding wrinkling of the metal strip.

The temporary tube that is being continuously produced (= continuously growing temporary tube) has a first end at which the tube is continuously growing and a second end that is opposite to the first end. The tube at the first end is continuously growing since the roll forming system is continuously supplying one or more flat elongated metal strips to the guiding body, which is forming a helix in such a way that consecutive windings of the helix do not overlap. The guiding body consists of rollers to guide the continuously growing tube without undesirable creasing, kinking or collapsing of the tube.

Please note that in the case of two (or more) metal strips in one layer, the next layer may be of the same structure or may comprise less or more strips. In order to obtain the desired overlap of the two concentric layers (in which the contact line between consecutive windings of the helix (as well as any contact lines in the case of two or more strips in one helix) of a layer is fully covered by a winding of the helix of the next layer) it is necessary that the pitch of each helix in a layer, comprising the one or more strips, is the same for all layers. Preferably each layer consists of one or two metal strips, more preferably one metal strip.

Suitably, the temporary tube consists of two concentric layers, each layer consisting of a helix with non-overlapping consecutive windings. It will be understood that the diameter of the outer layer in the temporary tube need to be slightly larger than the inner layer.

The gap between two concentric layers may be filled with an adhesive, an adhesive matrix filled with for example an insulating substance or filled with air.

Suitably, the temporary tube consists of a single layer consisting of a helix with non-overlapping consecutive windings. In the case that the temporary tube consists of a single layer formed by one metal strip, the diameter of the helix is between 5 and 250 cm, preferably between 10 and 150 cm, more preferably between 15 and 125 cm.

Suitably, the axial gap between two consecutive windings of the helix before welding is at most 0.5 cm, preferably at most 0.2 cm, more preferably at most 0.1 cm, most preferably, wherein the consecutive windings touch each other.

A single layer consisting of two or more strips is formed by continuously supplying two or more strips to the guiding body by a second or more roll forming system(s). Preferably, a single layer consisting of two or more strips is formed by continuously supplying two or more strips preformed into the shape of a helix having windings, in such a way that consecutive windings of the helix do not overlap and preferably touch or almost touch each other.

The consecutive windings of the helix on the guiding body are helically welded to each other, preferably by laser welding. Preferably, the consecutive windings of the helix are welded to each other as soon as the helix is supplied to the guiding body or as soon as the helix is formed by the guiding body. In this way the two (or) more helices, which are obtained by supplying two or more metal strips to the guiding body, will result in one helix. The windings are welded to each other with a speed of from 1 to 10 m/min, preferably of from 2 to 8 m/min, more preferably of from 3 to 5 m/min. It will be understood that the rate of producing the tube is faster when two helices are used.

The second end of the temporary tube is opposite to the first end. The second end of the temporary tube is continuously rotating and forwardly moving along and from the guiding body, since the temporary tube is continuously growing from the first end.

When using the process according to the invention long elongated tubes can continuously be formed without having difficulties with handling rotating long temporary tubes in the production facilities.

This is accomplished by cutting cylinders from the second end of the temporary tube in step b) of the present process. Preferably, cylinders are cut by laser cutting. Suitably, the cut cylinders may be moved from the guiding body to a second guiding body. At this second guiding body consecutive cylinders may placed in such a way that the ends of the cylinders touch to each other.

The length of the cylinders obtained in step b) is at least 1 m, preferably between 3 and 30 m, more preferably between 4 and 15 m.

In step c) of the process the cylinders are welded to each other to form the elongated tube. Preferably, a non-rotating elongated tube is formed.

Preferably, steps a, b and c of the present invention are performed at the same site, or in close proximity to each other. Reference herein to close proximity is that steps a, b and c are performed within a distance of less than 100 m, preferably less than 10 m from each other.

In this way the cylinders can also be welded to each other at the production site, instead of first transporting the cylinders to the site where natural gas and liquid petroleum are transported. Preferably, the cylinders are welded to each other by laser welding. The cylinders are welded to each other with a speed of from 1 to 10 m/min, preferably with a speed of from 2 to 8 m/min, more preferably with a speed of from 3 to 5 m/min.

It has been found that the elongated tube obtained in the present process may consist of one or two layers, wherein each layer consists of a helix with non-overlapping consecutive windings. In this way no stress corrosion is caused. Therefore, the present invention also relates to an elongated tube obtainable according to the present process.

The length of the elongated body is suitably at least 20 meters, preferably between 100 meters and 20 km, more preferably between 500 m and 5 km.

The elongated tube, when comprising one strip in each layer, the layer suitably has a circumference to strip ratio of between 3:1 and 40:1, preferably 4:1 and 28:1, more preferably between 6:1 and 20:1.

In the elongated tube, one metal strip suitably has a width of at least 2 cm, preferably between 20 and 300 cm, more preferably between 10 and 200 cm, and has a thickness of 0.2 to 5 mm, preferably 0.4 and 4 mm, more preferably between 0.8 and 2 mm. In the case that one layer consists of two metal strips, each strip may be smaller than the strip used in a layer consisting of only of one strip.

The invention also comprises the use of the elongated tube in the manufacture of an elongated, multilayered tubular body comprising a tubular inner hollow core, said elongated tube as inner casing surrounding the hollow core and an outer casing surrounding the inner casing.

The outer casing comprises at least two concentric layers surrounding each other. When using only one layer, the axial load resistance would be too low. In principle, there is no limit to the maximum number of layers, but a practical number will be up till 24, especially up till 20.

Each layer consists of one or more elongated metal strips preformed in the form of a helix having consecutive windings that do not overlap each other. The preformed flat, elongated metal strip is suitably made by plastic deformation of a flat elongated metal strip in a roll forming system as described above for the manufacture of the inner casing.

The elongated, multilayered body, when comprising one strip in each layer, suitably has a ratio circumference/strip width between 3 and 40, preferably 4 and 28, more preferably between 6 and 20, the circumference being the circumference of the smallest layer (or the first layer around the inner casing) of the outer casing. In the case of more than one strip in a layer, the strip width is defined as the sum of the strip widths in that layer.

The diameter of the helix may be between 1 and 1.4 times the diameter of the inner casing, suitably, the diameter of the helix is between 1 and 1.25 times the diameter of the inner casing, preferably between 1 and 1.12, more preferably between 1 and 1.04.

The distance between two windings in one layer in the outer casing is preferably relatively small. In that way the forces can be transferred relatively easy without any potential problems with respect to cracking of adhesive layers. The helix has a gap of at most 1 cm in axial direction between consecutive windings. In order to obtain the desired overlap of at least two concentric layers (in which each gap in a layer not being the outer layer is fully covered by winding of the helix of the consecutive surrounding layer) it is necessary that the pitch of each helix in a layer, comprising the one or more strips, is the same for all layers. The consecutive layers in the outer casing are bound to each other by an adhesive. Preferably the inner layer and the outer layer are being bound to each other by an adhesive. In principle every adhesive may be used (liquid, powder, etc.), but from a practical point of view an impregnated woven or non-woven strip is preferred. Preferably, the adhesive layer comprises a curable polymer, preferably a film based epoxy having a textile carrier, more preferably Cytec FM 8210-1.

The distance between the inner casing and the first layer in the outer casing is suitably at most 2 mm, preferably between 0.01 and 1 mm. In a similar way, the distance between two layers in the outer casing is at most 2 mm, preferably between 0.01 and 1 mm. Normally the gap between the inner casing and the first layer and between the layers in the outer casing will be filled with adhesive.

The length of the elongated, multilayered tubular body may vary from one meter to 40 km or even more. Suitably, the length is at least 20 meters, preferably between 100 meters and 20 km, more preferably between 500 m and 5 km.

The manufacture of said elongated, multilayered tubular body comprises providing the inner casing and providing one or more first flat elongated metal strips preformed into the shape of a helix and applying the helix onto the inner casing to form the first layer of the outer casing. By providing and applying adhesive, the first layer in the outer casing and the inner casing are bound to each other. By providing one or more second flat elongated metal strip preformed into the shape of a helix and applying the helix on the first layer of the outer casing a second layer of the outer casing is formed. Optionally, this process is followed by the further provision and application of one or more additional layers of adhesive and flat elongated metal strips preformed into the shape of a helix.

The first layer of the outer casing, consisting of one or more elongated metal strips in the form of a helix, may be wound around a non-rotating forwardly moving elongated open-ended tube. In this way difficulties in the forming long elongated multilayered tubular bodies are overcome.

The outer casing can be made, for example, of high strength steel, especially steels with high proportion of its material in the martensitic phase. Such tubular bodies have the advantage that high internal pressures can be withstood for a pipe having a relatively small wall thickness, hence, for a relatively low weight tubular body. The inner casing can be made, for example of a corrosion resistant material. In this way the requirements of the pipeline (corrosion resistance and strength) are at least separated.

The elongated, multilayered tubular body as described above is suitably made of a metal strip having a Specified Minimum Yield Stress (SMYS) of at least 100,000 lbs/square inch, preferably between 150,000 and 300,000 lbs/square inch, more preferably between 180,000 and 250,000 lbs/square inch.

The invention will be described hereinafter in more detail and by way of example, with reference to the accompanying drawings, in which:
Figure 1 schematically shows a side view of a part of an elongated tube obtainable by the process according to the invention; and
Figure 2 shows a part of a temporary tube on a guiding body and a roll forming system supplying a flat elongated metal strip to the guiding body.

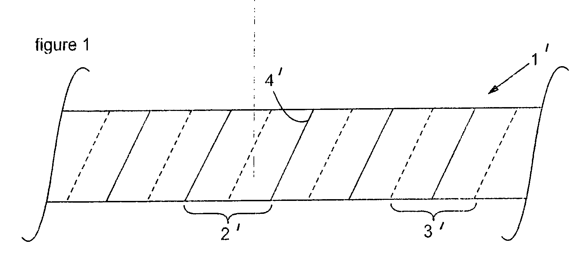

Figure 1 shows only the lines at the front side of tube 1'. Tube 1' consists of two concentric layers, each layer consisting of a helix with non-overlapping consecutive windings. Two windings of the helices have been indicated in the drawing, winding 2' in the outer layer and winding 3' in the inner layer. Each layer consists of one metal strip. The gap between to consecutive windings of the helix of the inner layer is fully covered by the winding of the outer layer. The consecutive windings have been welded to each other. The welded connections are shown 4' in the figure.

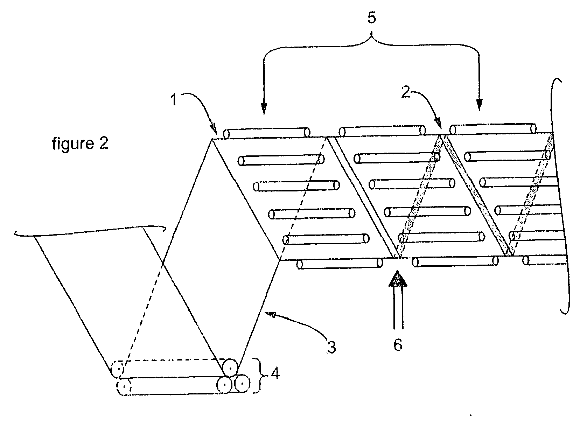

In Figure 2 a temporary tube is formed having a first end 1 that is continuously growing and a second end 2 opposite to the first end 1. A flat elongated strip 3 is fed into roll forming system 4. It is helically bended by the action of the three mandrels. The helically bended metal strip is supplied to guiding body 5. The consecutive winding of the helix on the guiding body are helically welded to each other by a laser 6.

## Claims

1. A process for the manufacture of an elongated tube,
the process comprising the following steps:
(a) forming a rotating temporary tube, the tube having a first end (1) at which the tube is continuously produced and a second end (2) opposite to the first end by continuously supplying a flat, elongated metal strip (3) to a guiding body (5), which guiding body is forming a helix from the strip in such a way that consecutive windings of the helix do not overlap, and helically welding the consecutive windings of the helix formed by the guiding body to each other;
(b) cutting cylinders from the second end (2) of the rotating temporary tube; **characterised in that** the process further comprises:
(c) welding the cylinders obtained in step (b) to each other to form the elongated tube, wherein steps a, b and c are performed at the same site or in close proximity to each other.

2. A process according to claim 1, wherein the temporary tube is formed by continuously supplying a flat, elongated metal strip (3) preformed into the shape of a helix to the guiding body (5).

3. A process according to claim 1 or 2, wherein the elongated open-ended tube formed in step (c) is a non-rotating tube.

4. A process according to any one of claims 1 to 3,
wherein the contact line between consecutive windings of the helix of a layer is fully covered by a winding of the helix of the next layer.

5. A process according to any one of claims 1 to 4,
wherein the temporary tube formed in step (a) consists of two concentric layers.

6. A process according to any one of claims 1 to 5,
wherein in step c) the cylinders are welded to each other by laser welding, preferably with a welding speed of from 1 to 10 m/min.

7. A process according to any one of claims 1 to 6,
wherein the axial gap between two consecutive windings of the helix, before welding, is at most 0.2 cm, preferably at most 0.1 cm, more preferably wherein the consecutive windings touch each other.

8. A process according to any one of claims 1 to 7,
wherein the flat, elongated metal strips (3) are steel strips, preferably corrosion resistant steel strips.

9. Use of the elongated tube obtained by a process according to any one of claims 1 to 8 in a process for the manufacture of an elongated, multilayered tubular body comprising a tubular inner hollow core, said elongated tube as inner casing surrounding the hollow core and an outer casing surrounding the inner casing, the outer casing comprising at least two concentric layers surrounding each other, each layer consisting of one or more elongated metal strips preformed into the shape of a helix having consecutive windings that do not overlap each other and having a gap of at most 1 cm in axial direction between consecutive windings, wherein each gap in a layer not being the outer layer is fully covered by a winding of the helix of the consecutive surrounding layer, wherein consecutive layers in the outer casing are bound to each other by an adhesive, the process comprising providing the elongated tube as inner casing, providing one or more first flat elongated metal strips preformed into the shape of a helix and applying the helix onto the inner casing to form the first layer of the outer casing, providing and applying adhesive, providing one or more second flat elongated metal strip preformed into the shape of a helix and applying the helix on the first layer of the outer casing to form the second layer of the outer casing, optionally followed by the further provision and application of one or more additional layers of adhesive and flat elongated metal strips preformed into the shave of a helix.

## Patentansprüche

1. Verfahren zum Herstellen eines langgestreckten Rohres, wobei das Verfahren folgende Schritte aufweist:
(a) Bildung eines rotierenden temporären Rohres, wobei das Rohr ein erstes Ende (1) hat, an dem das Rohr kontinuierlich hergestellt wird, und ein dem ersten Ende gegenüberliegendes zweites Ende (2), durch kontinuierliches Zuführen eines flachen, langgestreckten Metallstreifens (3) zu einem Führungskörper (5), welcher Führungskörper aus dem Streifen eine Wendel bildet, derart, daß die aufeinanderfolgenden Wendelwindungen sich nicht überlappen, und wendelförmiges Verschweißen der von dem Führungskörper geformten aufeinanderfolgenden Wendelwindungen;
(b) Schneiden von Zylindern aus dem zweiten Ende (2) des rotierenden temporären Rohres; **dadurch gekennzeichnet, daß** das Verfahren ferner umfaßt:
(c) Aneinanderschweißen der im Schritt (b) erhaltenen Zylinder zur Bildung des langgestreckten Rohres, wobei die Schritte a, b und c an der gleichen Stelle oder eng benachbart ausgeführt werden.

2. Verfahren nach Anspruch 1, bei welchem das temporäre Rohr geformt wird, indem ein flacher, langgestreckter Metallstreifen (3), der in die Form einer Wendel vorgeformt ist, dem Führungskörper (5) zugeführt wird.

3. Verfahren nach Anspruch 1 oder 2, bei welchem das langgestreckte offenendige Rohr, das im Schritt (c) geformt wird, ein nicht rotierendes Rohr ist.

4. Verfahren nach einem der Ansprüche 1 bis 3, bei welchem die Kontaktlinie zwischen aufeinanderfolgenden Windungen der Wendel einer Lage vollständig durch eine Windung der Wendel der nächsten Lage bedeckt ist.

5. Verfahren nach einem der Ansprüche 1 bis 4, bei welchem das temporäre Rohr, das im Schritt (a) geformt wird, aus zwei konzentrischen Lagen besteht.

6. Verfahren nach einem der Ansprüche 1 bis 5, bei welchem im Schritt (c) die Zylinder durch Laserschweißung aneinandergeschweißt werden, vorzugsweise mit einer Schweißgeschwindigkeit von 1 bis 10 m/min.

7. Verfahren nach einem der Ansprüche 1 bis 6, bei welchem der axiale Spalt zwischen zwei aufeinanderfolgenden Windungen der Wendel vor dem Schweißen höchstens 0,2 cm, vorzugsweise höchstens 0,1 cm beträgt, wobei noch bevorzugter die aufeinanderfolgenden Windungen sich gegenseitig berühren.

8. Verfahren nach einem der Ansprüche 1 bis 7, bei welchem die flachen, langgestreckten Metallstreifen (3) Stahlstreifen sind, vorzugsweise korrosionsfeste Stahlstreifen.

9. Verwendung des langgestreckten Rohres, das durch ein Verfahren nach einem der Ansprüche 1 bis 8 erhalten wird, in einem Verfahren zum Herstellen eines langgestreckten, mehrlagigen rohrförmigen Körpers, der einen rohrförmigen inneren hohlen Kern umfaßt, wobei das langgestreckte Rohr eine innere Auskleidung hat, die den hohlen Kern umgibt, und eine äußere Auskleidung, die die innere Auskleidung umgibt, wobei die äußere Auskleidung zumindest zwei konzentrische Lagen aufweist, die einander umgeben, wobei jede Lage aus einem oder mehreren langgestreckten Metallstreifen besteht, die in die Gestalt einer Wendel mit aufeinanderfolgenden Windungen vorgeformt sind, die einander nicht überlappen und einen Spalt von höchstens 1 cm in axialer Richtung zwischen aufeinanderfolgenden Windungen bilden, wobei jeder Spalt in einer Lage, die nicht die äußere Lage ist, vollständig durch eine Windung der Wendel der aufeinanderfolgenden umgebenden Lage bedeckt ist, wobei die aufeinanderfolgenden Lagen in der äußeren Auskleidung durch einen Klebstoff aneinandergebunden sind, wobei das Verfahren umfaßt, daß das langgestreckte Rohr als innere Auskleidung vorgesehen wird, wobei einer oder mehrere erste flache langgestreckte Metallstreifen zur Gestalt einer Wendel vorgeformt werden, und die Wendel auf die innere Auskleidung aufgebracht wird, um die erste Lage der äußeren Auskleidung zu bilden, Klebstoff bereitgestellt und aufgebracht wird, einer oder mehrere zweite flache langgestreckte Metallstreifen, die in die Gestalt einer Wendel vorgeformt sind, bereitgestellt werden, und die Wendel auf die erste Lage der äußeren Auskleidung zur Bildung der zweiten Lage der äußeren Auskleidung aufgebracht wird, gegebenenfalls gefolgt von dem weiteren Bereitstellen und Aufbringen einer oder mehrerer zusätzlicher Lagen von Klebstoff und flacher, langgestreckter Metallstreifen, die in die Gestalt einer Wendel vorgeformt sind.

## Revendications

1. Procédé pour fabriquer un tube allongé, le procédé comprenant les étapes consistant à :
(a) former un tube temporaire rotatif, le tube ayant une première extrémité (1), au niveau de laquelle le tube est produit en continu, et une seconde extrémité (2) opposée à la première extrémité, délivrer en continu une bande de métal allongée plate (3) à un corps de guidage (5), lequel corps de guidage forme une hélice à partir de la bande de sorte que les enroulements consécutifs de l'hélice ne se chevauchent pas, et souder de manière hélicoïdale les enroulements consécutifs de l'hélice formés par le corps de guidage l'un à l'autre ;
(b) couper des cylindres dans la seconde extrémité (2) du tube rotatif temporaire ; **caractérisé en ce que** le procédé comprend en outre l'étape consistant à :
(c) souder les cylindres obtenus à l'étape (b) l'un à l'autre pour former le tube allongé, dans lequel les étapes a, b et c sont effectuées sur le même site ou à proximité étroite l'une de l'autre.

2. Procédé selon la revendication 1, dans lequel le tube temporaire est formé en délivrant en continu une bande de métal allongée plate (3) préformée en hélice au corps de guidage (5).

3. Procédé selon la revendication 1 ou 2, dans lequel le tube allongé à extrémité ouverte formé à l'étape (c) est un tube non rotatif.

4. Procédé selon l'une quelconque des revendications 1 à 3, dans lequel la ligne de contact entre des enroulements consécutifs de l'hélice d'une couche est complètement recouverte par un enroulement de l'hélice de la couche suivante.

5. Procédé selon l'une quelconque des revendications 1 à 4, dans lequel le tube temporaire formé à l'étape (a) est constitué de deux couches concentriques.

6. Procédé selon l'une quelconque des revendications 1 à 5, dans lequel, à l'étape c), les cylindres sont soudés l'un à l'autre par soudage au laser, de préférence à une vitesse de soudage de 1 à 10 m/min.

7. Procédé selon l'une quelconque des revendications 1 à 6, dans lequel l'intervalle axial entre deux enroulements consécutifs de l'hélice, avant soudage, est au maximum de 0,2 cm, de préférence au maximum de 0,1 cm, mieux encore dans lequel les enroulements consécutifs se touchent l'un l'autre.

8. Procédé selon l'une quelconque des revendications 1 à 7, dans lequel les bandes de métal allongées plates (3) sont des bandes en acier, de préférence des bandes en acier résistant à la corrosion.

9. Utilisation du tube allongé obtenu par un procédé selon l'une quelconque des revendications 1 à 8 dans un procédé pour la fabrication d'un corps tubulaire multicouche allongé comprenant une âme creuse interne tubulaire, ledit tube allongé se présentant sous la forme d'une gaine interne entourant l'âme creuse et d'une gaine externe entourant la gaine interne, la gaine externe comprenant au moins deux couches concentriques s'entourant l'une l'autre, chaque couche étant constituée d'une ou plusieurs bandes de métal allongées préformées en hélice ayant des enroulements consécutifs qui ne se chevauchent pas l'un l'autre et ayant un intervalle au maximum de 1 cm dans la direction axiale entre des enroulements consécutifs, dans laquelle chaque intervalle d'une couche qui n'est pas la couche externe est entièrement recouvert d'un enroulement de l'hélice de la couche consécutive qui l'entoure, dans laquelle les couches consécutives de l'autre gaine sont liées l'une à l'autre par un adhésif, le procédé comprenant la mise en oeuvre du tube allongé comme gaine interne, la mise en oeuvre d'une ou plusieurs premières bandes de métal allongées plates préformées en hélice et l'application de l'hélice sur la gaine interne pour former la première couche de la gaine externe, la mise en oeuvre et l'application d'un adhésif, la mise en oeuvre d'une ou plusieurs deuxièmes bandes de métal allongées plates préformées en hélice et l'application de l'hélice sur la première couche de la gaine externe pour former la deuxième couche de la gaine externe, le tout étant suivi éventuellement de la mise en oeuvre et de l'application d'une ou plusieurs couches additionnelles d'adhésif et de bandes de métal allongées plates préformées en hélice.
